# EUROPÄISCHE PATENTSCHRIFT

(11) **EP 1 852 173 B1**
(45) Veröffentlichungstag und Bekanntmachung des Hinweises auf die Patenterteilung: **28.04.2010**
(21) Anmeldenummer: 06009217.8
(22) Anmeldetag: 04.05.2006
(51) Int. Cl.: B01D 53/84

(54) **Verfahren und Vorrichtung zur Behandlung von mit Schadstoffen behafteten Abgasen**
Process and apparatus for treatment of pollutant containing waste gases
Procédé et dispositif pour le traitement des gaz d'échappement chargés de polluants

(43) Veröffentlichungstag der Anmeldung: 07.11.2007
(73) Patentinhaber: Kalogeo Anlagenbau GmbH, 2544 Leobersdorf (AT)
(72) Erfinder: Ramharter, Peter Michael, Dr. Dipl.-Ing., 2700 Wr. Neustadt (AT)
(74) Vertreter: HOFFMANN EITLE

(56) Entgegenhaltungen:
- EP-A1- 1 378 494
- WO-A-91/12829
- WO-A2-2005/123237
- CH-A5- 645 333
- DE-A1- 4 419 766
- DE-C1- 4 422 855
- US-A- 4 062 770

## Beschreibung

Die Erfindung betrifft ein Verfahren zur Behandlung von mit Schadstoffen behafteten Abgasen aus der thermischen Verwertung von Reststoffen, insbesondere biogenen Reststoffen, vorzugsweise in einer Kläranlage. Dabei schließt das Verfahren idealerweise direkt an die Verbrennung an.

Reststoffe, wie beispielsweise Schlämme aus kommunalen Kläranlagen oder auch aus industriellen Anlagen, werden gemäß dem bekannten Stand der Technik großtechnisch zur Wiederverwendung aufbereitet. Dabei ist neben der Umwandlung in feste, wiederverwertbare Anteile auch die Produktion von bspw. Produktgas bekannt.

Diese eine großtechnische Verwertung der Reststoffe durchführenden Aufbereitungsanlagen sind zufolge der großen Mengen an Reststoffen, welche sie verarbeiten müssen, um kostendeckend arbeiten zu können, in der Regel als zentral positionierte Aufbereitungsanlagen ausgeführt.

Zusätzlich zu den hohen Aufbereitungskosten fallen durch diese Standortwahl somit auch noch hohe Transportkosten an, da die Schlämme zu diesen zentralen Einrichtungen oftmals über große Distanzen transportiert werden müssen.

Ein weiterer Kostenfaktor wird durch den oftmals hohen Anteil an biogenen Reststoffen in den zu verarbeitenden Schlämmen bedingt. Deren Verwertung ist nicht nur schwierig sondern auch kostspielig. Vor allem tragen die in vielen Fällen zur Stabilisierung der Schlämme beigemengten Substitutionsstoffe (z.B. Kalk) nichts zur Vereinfachung der Verwertung bei, sondern erhöhen lediglich die zu entsorgende Abfallmenge.

Diese Lösung wirkt somit kontraproduktiv, da die Entsorgung selbst bekanntermaßen mengenmäßig eingeschränkt ist. Die Entsorgung erfolgt dabei, wie an sich bekannt, im kommunalen Bereich durch Deponierung auf Halden, in der Landwirtschaft auch, soweit zulässig, durch Ausbringung auf die Felder. Insbesondere die im Schlamm enthaltenen Schadstoffe sowie auch der Trend zur biologischen Landwirtschaft verhindern allerdings eine Ausbringung in größerem Umfang.

Verwertungsanlagen wiederum können aufgrund ihrer hohen Gestehungskosten als auch zufolge mangelnder Akzeptanz durch die Bevölkerung wegen der zu erwartenden Emissionen nicht in beliebiger Anzahl errichtet werden.

Ein Verfahren zur Verarbeitung biogener Reststoffe durch thermische Verwertung ist aus EP-A-1 378 494 bekannt.

Aufgabe der Erfindung ist es daher, ein Verfahren zu schaffen, welches die bekannten Nachteile vermeidet und die bei der thermischen Verwertung von vorzugsweise biogenen Reststoffen, insbesondere Schlämmen, entstehenden Abgase direkt nutzt und eine Abgabe derselben an die Umwelt vermeidet.

Darüber hinaus ist es Aufgabe der Erfindung, ein gegenüber den bekannten Verwertungen von Abgasen energetisch vorteilhafteres Verfahren zu schaffen

Das Verfahren kann zur allgemeinen Weiterverwertung von Abgasen aus Anlagen zur Verbrennung von Reststoffen eingesetzt werden, wird jedoch in Folge zur Verwertung von Abgasen aus der thermischen Verwertung von Klärschlämmen im Bereich einer Kläranlage beschrieben, für welche es optimale Voraussetzungen bietet.

Die Erfindung löst die Aufgabe mit Hilfe eines Verfahrens gemäß Anspruch.

Das direkt an die Verbrennung anschließende Verfahren übernimmt die abgegebenen, mit Schadstoffen behafteten Abgase direkt und führt sie einem Reaktionsbereich, der im Falle des beschriebenen Einsatzes des Verfahrens unter Zuhilfenahme der Einrichtungen einer Kläranlage ein Belebungsbecken oder auch eine gesondert aufgestellte Kolonne sein kann. In genanntem Reaktionsbereich zerlegen die darin enthaltenen Bakterien die eingebrachte Schmutzfracht und reinigen die Abgase. Es stellt sich im Zuge dieses Verfahrensschrittes ein Gleichgewicht ein. Die bei der Umsetzung der Schadstoffe entstehende Energie wird nicht aus dem Prozeß ausgebracht, sondern innerhalb des Prozesses weiterverwendet. Der durch den Umsetzungsprozess entstehende Schlamm kann entweder im Belebungsbecken verbleiben oder in einen gesonderten Schlammbehälter oder einen Faulturm verbracht werden. Aus diesen kann Wärme wiederum dem Belebungsbecken oder auch einem dem Reaktionsraum vorgeschalteten Wärmetauscher, wie in Folge näher beschrieben, zugeführt werden.

Nach dem Umsetzungsprozeß durch die Bakterien verlässt reine Luft den Reaktionsbereich, hier insbesondere das Belebungsbecken über die Oberfläche und wird an die Umwelt abgegeben.

Nach einem weiteren Merkmal der Erfindung werden, wie oben erwähnt, die Abgase vor dem Einbringen in den Reaktionsbereich auf Reaktionstemperatur gekühlt. Nach einem anderen Merkmal der Erfindung werden die Abgase über einen Wärmetauscher geführt, die von den Abgasen über den Wärmetauscher abgegebene Wärme wird dem Reaktionsmedium zugeführt. Dadurch wird eine Verstärkung der Schlammproduktion angeregt. Die Idealtemperatur im Reaktionsbereich, also im Belebungsbecken oder der Kolonne liegt bei 8° - 14°C. Gemäß einem weiteren Merkmal der Erfindung wird die Temperatur der Abgase daher auf die Temperatur des Reaktionsbereiches, vorzugsweise 8 - 14°C, abgekühlt.

Als Reaktionsmedium im Reaktionsbereich ist erfindungsgemäß Klärschlamm, mit Gas durchsetzter Klärschlamm oder ein Schlamm- Wassergemisch vorgesehen. Genanntes Gas liegt dabei oftmals in Form von bei der Umsetzung der Schmutzfracht entstehenden Gasblasen vor.

Erfindungsgemäß wird auch Wärme aus dem Reaktionsmedium abgezogen und zur Kühlung des Wärmetauschers diesem zugeführt.

Ergänzend ist nach einem weiteren Merkmal der Erfindung auch vorgesehen, zur Kühlung des Wärmetauschers zusätzlich zur aus dem Reaktionsmedium abgezogenen Wärme ein weiteres, externes Medium einzusetzen.

Nach einem anderen Merkmal der Erfindung werden dem Wärmetauscher Wärme und Kondensat entzogen, welche wahlweise dem Reaktionsbereich und/oder einer externen Verwendung zugeführt werden.

Zusammenfassend wird festgehalten, dass die aus einer Verbrennungsanlage kommenden Abgase im allgemeinen, außer im Fall einer kalten Trocknung bei sehr niedrigen Austrittstemperaturen, über einen Wärmetauscher geführt und dabei abgekühlt und anschließend in das Belebungsbecken der Kläranlage über ein integriertes Lufteintragssystem eingebracht werden.

Die Schadstoffe der eingebrachten Abgase werden nach einem anderen Merkmal der Erfindung durch bakterielle Prozesse im Belebungsbecken, vorzugsweise unter Nutzung des Restsauerstoffes der eingebrachten Abgase zu Schlamm umgesetzt. Ein gegebenenfalls nach Umsetzung der Schadstoffe durch die Bakterien verbleibender Restschadstoffanteil, insbesondere Staubpartikel, werden an den Schlamm gebunden werden und gereinigte Luft über die Oberfläche des Belebungsbeckens abgeführt.

Idealerweise lässt sich bei Einsatz des gegenständlichen Verfahrens eine Verbrennungsanlage ohne Kamin realisieren, da die Abgase direkt übernommen und durch das erfindungsgemäße Verfahren weiter verwertet werden können. Vorteilhafterweise werden die Abgase über einen Wärmetauscher auf eine Temperatur gekühlt, mit welcher sie von den Bakterien im Belebungsbecken maximal umgesetzt werden können. Nach dem Abkühlen werden die verunreinigten Abgase in das Belebungsbecken eingeleitet. Die dadurch erfolgte Erwärmung steigert wiederum die Ausbeute durch eine Erhöhung der Schlammproduktion durch die Bakterien. Anderseits kühlt das Wasser im Belebungsbecken die eingeleiteten Abgase. Die Bakterien brauchen die Schadstoffe im Wasser auf, es entsteht Schlamm. Durch den Schlamm erfolgt wiederum die Abgasreinigung im Belebungsbecken, da alle Schadstoffe der Abgase in diesem gebunden werden, was zu einer vollständigen Reinigung führt.

Durch das erfindungsgemäße Verfahren wird die Wärme somit ideal genutzt, insbesondere wird sie zur Anregung der Bakterien verwendet. Diese verstärken durch die Wärmezufuhr ihre Produktion. Die dabei entstehende Wärme kann wiederum abgezogen und anderweitig verwendet werden.

Weiters wird mit den Abgasen auch Sauerstoff eingebracht. Die Verbrennungsluft selbst beinhaltet ca. 21% Sauerstoff. Nach der Verbrennung verbleiben i. a. 6- 18% Sauerstoff. Dieser belebt zusätzlich zur zugeführten Wärme die Tätigkeit der Bakterien. Ein weiterer Vorteil des Verfahrens ist somit, dass kein zusätzlicher Sauerstoff in das Belebungsbecken eingebracht werden muß. Indem die Gesamtwärme des Systems genützt wird, da die Abgase bis auf Temperatur des Reaktionsbereiches heruntergefahren werden, ist das Verfahren auch energetisch besonders vorteilhaft.

Da Kläranlagen im Allgemeinen belüftet sind, ist ein nicht unbeträchtlicher Verdichtungsaufwand notwendig. Beim erfindungsgemäßen Verfahren wird nicht aus der Umgebungsluft sondern aus dem Kamin angesaugt. Ein zusätzlicher Energieaufwand zur Ansaugung und

Verdichtung der Luft kann somit unterbleiben.

Durch die Mehrproduktion an Schlamm zufolge der Zufuhr von Wärme, Luftsauerstoff und

Schadstoffen kann in den der Kläranlage angeschlossenen Faultürmen auch mehr Biogas produziert und zur Weiterverwendung bereitgestellt werden, was einen weiteren Vorteil gegenüber den bekannten Verwertungen bietet.

Das gereinigte Abgas, im wesentlichen Luft, verlässt das Klärbecken über die Oberfläche.

Durch die Organik im Belebungsbecken erfolgt somit insbesondere auch eine Verbesserung der Abgaswerte. Dabei wirkt das Wasser im Belebungsbecken ähnlich Gaswäscherkolonnen. Allerdings benötigt das erfindungsgemäße Verfahren gegenüber den im Einsatz befindlichen Gaswäschern weder zusätzlich einzubringendes Wasser und die damit verbundene Umwälzung mittels Wasserpumpen noch Säuren oder Lauge zur Einstellung des pH-Wertes. Auch kann der Einsatz zusätzlicher Dosiermittel unterbleiben.

Nach einem weiteren Merkmal der Erfindung werden die Abgase in eine mit Klärschlamm oder mit Gas durchsetztem Klärschlamm gefüllte Kolonne geführt, wobei die Kolonne von einem Schlammbehältnis wie Faulturm, Schlammbecken oder Belebungsbecken gespeist und nach erfolgter Reaktion der Schlamm in dieses Schlammbehältnis zurück verbracht wird. Wird also der Reaktionsbereich in einer Kolonne realisiert, wird diese mit Schlamm aus einem Schlammbehältnis gespeist und der Schlamm nach erfolgter Reaktion wieder aus der Kolonne verbracht. Im Falle eines Belebungsbeckens kann der produzierte Schlamm auch darin verbleiben. Das Einbringen der Abgase in das Belebungsbecken erfolgt feinblasig, vorzugsweise durch Eindüsen in Abhängigkeit vom erwarteten Partikelanteil der Abgase. Erfindungsgemäß werden sowohl die Abgase als auch bei der Abkühlung gegebenenfalls entstandenes Kondensat über ein Eintragesystem in das Belebungsbecken der Kläranlage eingebracht.

Das erfindungsgemäße Verfahren bietet somit auch ein besseres Abreinigungsverhalten, insbesondere auch bei der Reinigung von im Abgas enthaltenem Feinstaub, welcher vollständig an den Schlamm gebunden werden kann.

Idealerweise erfolgt nach einem weiteren Merkmal der Erfindung die Kühlung der Abgase in mehreren Schritten. Eine Vorkühlung der Abgase erfolgt im Wärmetauscher, der dem Belebungsbecken vorgeschaltet ist oder sich in diesem befindet. Durch die schrittweise Abkühlung der Abgase bzw. Wärmeabgabe an das Wasser/Schlammgemisch erfolgt eine kontinuierliche Anregung der Bakterienaktivität und damit eine ebensolche Schlammproduktion. Bereits bei einer Temperaturerhöhung um 10°C verdoppelt sich die Enzymtätigkeit.

Die eingehenden Abgase liegen beispielsweise bei Zementöfen bei 1400°C oder höher, bei herkömmlicher Pyrolyse, Thermolyse oder Verbrennung, bei ca. 850°C. Die Restwärme kann jedenfalls genutzt und "gewinnbringend" umgesetzt werden.

Es ist auch vorgesehen, dass die Abkühlung der Abgase bei korrosiven Medien maximal bis zum Kondensationspunkt des korrosiven Anteil außerhalb des Reaktionsbereiches und die weitere Abkühlung der Abgase im Reaktionsbereich erfolgt. Die Abkühlung des korrosiven Anteiles der Abgase erfolgt somit ausschließlich extern im Wärmetauscher, wobei die Endtemperatur der Abgase im Wärmetauscher vorteilhafterweise etwas über dem Taupunkt liegt, ehe diese zur weiteren Abkühlung bzw. zur weiteren Nutzung der Abwärme in das Belebungsbecken eingedüst werden. Diese Eindüsung erfolgt im Allgemeinen über Platten oder Belüfter des Lufteintragesystems des Belebungsbeckens. Die Schaffung eines zusätzlichen Systems dafür kann somit unterbleiben.

Für den Fall, dass die Abgase keine korrosiven Medien tragen, kann nach einem anderen Merkmal der Erfindung die Abkühlung der Abgase auch ausschließlich im Reaktionsbereich erfolgen. Durch die beispielsweise Anordnung des Wärmetauschers innerhalb des Belebungsbeckens erfolgt der gesamte Wärmeaustausch in diesem.

Gemäß dem Verfahren kann vor dem Einbringen der Abgase in den Reaktionsbereich eine Vorreinigung der Abgase erfolgen.

In einer Vorreinigung werden die im Gasstrom beinhalteten Staubpartikel im allgemeinen mittels eines Zyklons im Bereich der Verbrennungsanlage zu ca. 95% vorabgeschieden. Der Reststaub wird über das Wasser jedenfalls vollständig aufgenommen.

Auch hier zeigt sich der enorme Vorteil des erfindungsgemäßen Verfahrens gegenüber bspw. herkömmlichen Gaswäschern, bei welchen die Reinigung in Abhängigkeit vom eingesetzten Filter erfolgt. Insbesondere bei Feinstaub zeigen sich hier Mängel, verglichen mit der vorliegenden Erfindung.

Zur Vorreinigung der Abgase können diese auch einer Sorption (Trocken oder Nass) zugeführt oder durch einen Schlamm/ Organikfilter geführt werden. Eine solche Vorreinigung kommt insbesondere bei schwer mit Schadstoffen belasteten Abgasen zum Einsatz. Beim Einsatz eines Schlamm/Organikfilters werden die Abgase durch ein Fest- und/oder Flüssigbett geführt. Die Entfernung der Schadstoffe erfolgt vor oder auch im Wärmetauscher. Dabei geht ein Medium durch das andere, spezifische Schadstoffe werden dabei herausgenommen. Für den Fall, dass der Wärmetauscher ein Filter ist, entspricht dies bereits einer ersten Abgasreinigungsstufe.

Vorteilhafterweise kann die Energie ohne Kondensation genutzt werden. Die Leitungen sind somit korrosionsfrei. Die Abgase gehen mit ca. 150°C ins Belebungsbecken. Bei Einsatz eines Kamins, wie derzeit allgemein üblich, geht diese Wärmeleistung verloren bzw. würde eine Abkühlung zu Kondensation führen. Das entstehende Kondensat, die so genannte Sotte, ist aber in diesem Fall hochaggressiv und muss jedenfalls gesondert behandelt werden.

Durch richtige Wahl der eingesetzten Komponenten sowie Abzug von Asche nach der Verbrennung als auch Abzug aus dem Vorfluter kann eine eventuelle Aufkonzentration von Schadstoffen vermieden werden.

Weitere Vorteile zeigen sich beim Grenzwert der Total Organic Compounds (TOC), weil die Aufnahme der Schadstoffe durch den Schlamm gegenüber herkömmlichen Methoden einen besseren Wirkungsgrad zeigt.

Das erfindungsgemäße Verfahren kann idealerweise auch einer bereits bestehenden Abgasreinigung nachgeschaltet werden, um deren Ausbeute zu verbessern.

Das Verfahren führt wahlweise die den Abgasen im Wärmetauschverfahren entnommene Energie dem Reaktionsbereich des Belebungsbeckens zu.

Dem Wärmetauscher wird Wärme und Kondensat entzogen, die Wärme und das Kondensat werden wahlweise dem Belebungsbecken und/ oder einer externen Verwendung zugeführt.

Ein weiteres Merkmal der Erfindung ist es, dass die Eingangstemperatur der Abgase in das Belebungsbecken vorregelbar ist. Damit kann ideal auf die Bedürfnisse der eingesetzten Bakterien eingegangen werden. Sie können durch diese Regeleigenschaft zu maximaler Ausbeute angeregt werden. Durch die ideale Wärmeabgabe der Abgase an das Reaktionsmedium, vorzugsweise das Wasser/Schlammgemisch im Belebungsbecken erfolgt eine Erhöhung der Bakterienaktivität und somit eine maximale Schadstoffbeseitigung gepaart mit maximaler Energieausbeute.

Das Verfahren verarbeitet Schlämme, insbesondere Klärschlämme. Der entstehende Schlamm kann abgezogen und einer weiteren thermischen Verwertung zugeführt werden.

Das erfindungsgemäße Verfahren nutzt also die gesamte im Abgas enthaltene Energie bis zu einer Beckentemperatur von 8 - 14°C. Demgegenüber wird bei den herkömmlichen Verfahren die Energie bei 150 - 250°C an die Umgebung abgegeben. Insbesondere beim Einsatz von Kaminen kann diese Temperatur auch nicht gesenkt werden, da sonst Beschädigung des Kamins durch Säurekondensation (Sotte) droht. Das erfindungsgemäße Verfahren löst dieses bei korrosiven Medien bestehende Problem durch Auftrennung der Abkühlung (Wärmeabgabe) in mehrere Stufen oder auch durch heiße Eindüsung. Die natürliche Reinigungskraft der Klärbecken wird genutzt. Der mit den Abgasen nach Vorreinigung in das Klärbecken eingebrachte Reststaub verbleibt fast vollständig in diesem - Staub, insbesondere Feinstaub wird zu fast 100% entfernt. Damit resultiert aus dem erfindungsgemäßen Verfahren eine wesentliche Verbesserung der Abluftgüte. Die Abluft selbst wird zur Belebung der Becken verwendet, eine gesonderte Frischluftzufuhr - wie bei den bekannten Verfahren notwendig - kann entfallen. Durch den Vordruck des Abgases kann der Aufwand der für die Belebung notwendigen Verdichtung des Mediums jedenfalls erheblich reduziert werden.

Eine geeignete Vorrichtung zur Durchführung des erfindungsgemäßen Verfahrens betrifft, wie in Folge beschrieben, eine Kläranlage. Sie umfasst somit wenigstens ein Klärschlamm und Bakterien enthaltendes Belebungsbecken(R) oder einer Kolonne und ein Schlammsammelbehältnis (SB). Weiters ist auch ein Wärmetauscher(WT) vorgesehen.

Vorzugsweise ist der Wärmetauscher (WT) im Belebungsbecken vorgesehen. Daraus resultiert eine kompakte Ausbildung der Vorrichtung.

Weiterhin ist der Wärmetauscher (WT) vorzugsweise mäanderförmig ausgebildet und anschließend an den Wärmetauscher ein Eindüsungssystem zum Eindüsen der Abgase und gegebenenfalls bei der Abkühlung entstandenes Kondensat in den Klärschlamm vorgesehen. Die Abgase durchlaufen den vertikal im Belebungsbecken (R) angeordneten mäanderförmigen Wärmetauscher und verlassen diesen über das im Bodenbereich des Belebungsbeckens angeordnete Eindüsungssystem. Der Reaktionsbereich befindet sich nun oberhalb des Eindüsungssystems. Es erfolgt die Zerlegung der Schmutzfracht durch die Bakterien. Es wird Schlamm produziert. Die reinen Anteile, nämlich im wesentlichen 100% reine Luft verlässt das Belebungsbecken über die Wasseroberfläche und wird an die Umwelt abgegeben.

Ebenso bevorzugt ist es, dass die Anlage zur thermischen Verwertung von Reststoffen, der durch das Belebungsbecken oder eine Kolonne gebildete Reaktionsbereich und der Wärmetauscher zu einer baulichen Einheit zusammengefaßt sind und dass die bauliche Einheit aus Modulen besteht

Vorzugsweise ist vorgesehen, dass die aus Modulen aufgebaute bauliche Einheit transportabel ausgebildet ist.

Daraus resultiert die Möglichkeit, das Verfahren rasch und dezentral eine Weiterverwertung von Abgasen zu realisieren.

Die Erfindung wird in Folge anhand eines Ausführungsbeispieles unter Zuhilfenahme der angeschlossenen Zeichnung näher beschrieben.

Es zeigen
Fig. 1 eine schematische Darstellung eines Ablaufschemas des erfindungsgemäßen Verfahrens und
Fig.2 bis 7 Varianten der Darstellung gemäß Fig.1

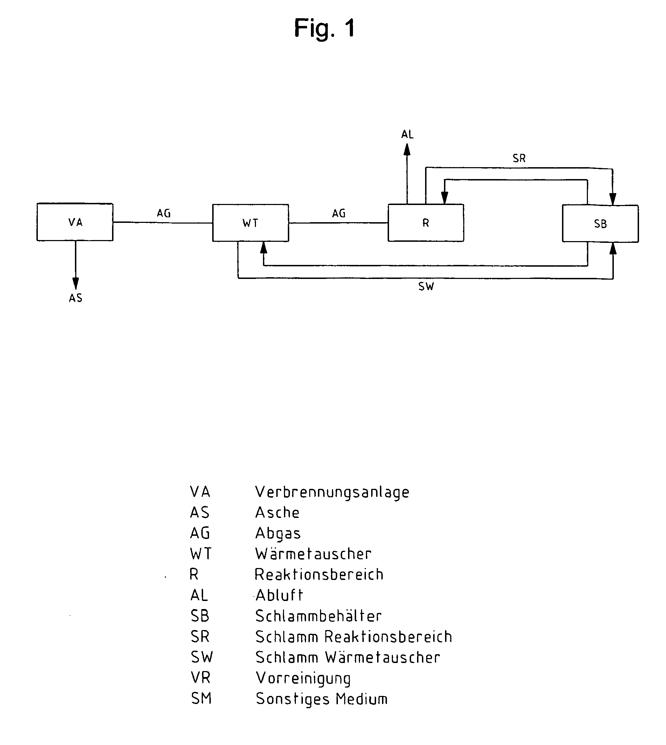

Fig. 1 zeigt eine Grundvariante zur Durchführung des erfindungsgemäßen Verfahrens. Aus der Verbrennungsanlage (VA) wird einerseits Abgas (AG) und anderseits Asche (AS) abgezogen.

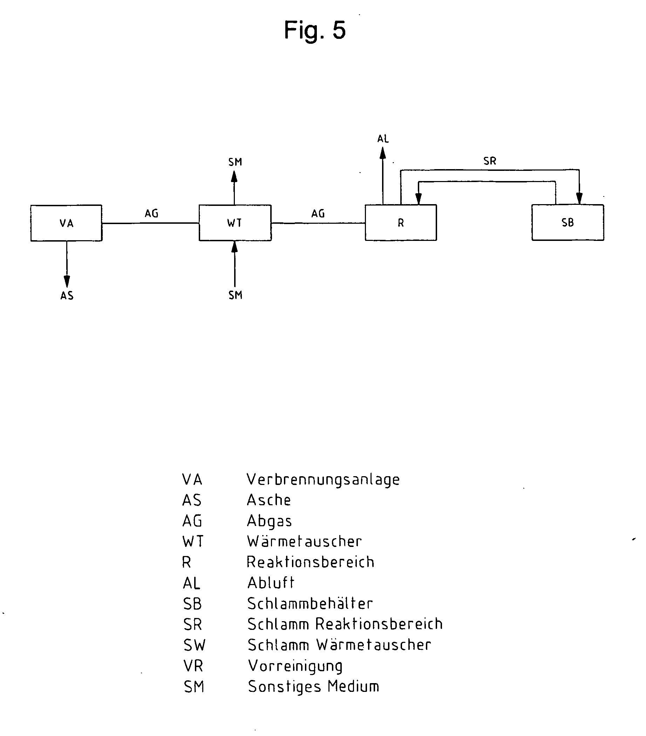

Das heiße Abgas (AG) wird einem Wärmetauscher (WT) zugeführt. Hier erfolgt Wärmeabgabe durch Abkühlung des heißen Abgases (AG). Es kann jede Art von Wärmetauscher zum Einsatz kommen, bspw. Plattentauscher, Rohrbündelwärmetauscher oder auch, wie in Fig. 5 dargestellt, ein im Belebungsbecken angeordneter Wärmetauscher.

Das abgekühlte Abgas (AG) wird anschließend dem Reaktionsraum (R) zugeführt. Dieser kann sowohl durch ein Belebungsbecken als auch eine gesonderte Kolonne realisiert sein.

Hier werden die Schmutzanteile bzw. die Schmutzfracht durch im Wasser befindliche Bakterien zerlegt, bis sich Gleichgewicht einstellt. Nach der Reinigung verlässt Abluft (AL) das Belebungsbecken. Entstehender Schlamm kann in einen gesonderten Schlammbereich (SB), bspw. einen Faulturm, ein Schlammbecken oder einen Schlammbehälter übergeführt werden. Dieser Bereich kann aber auch durch das Belebungsbecken selbst substituiert sein. Zwischen Reaktionsbereich und Schlammbereich kann in beiden Richtungen Wärmeaustausch erfolgen. Ein ebensolcher Austausch ist auch zwischen Wärmetauscher (WT) und Schlammbereich (SB) vorgesehen. Bei Abzug von Wärme aus dem Wärmetauscher wird dabei die Schlammproduktion unterstützt bzw. gesteigert.

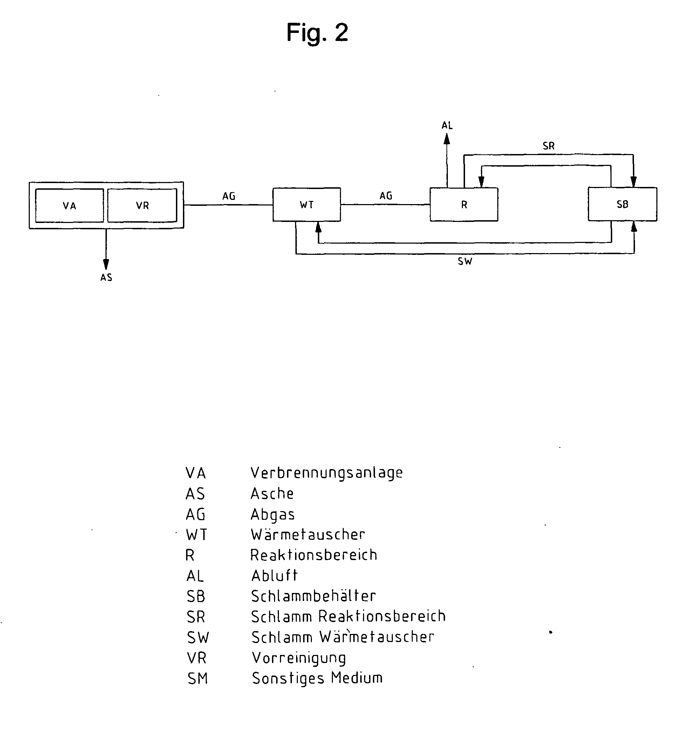

Fig. 2 zeigt die in die Verbrennungsanlage (VR) integrierte Vorreinigung (VR) der heißen Abgase (AG). Zu den Methoden der Voreinigung siehe auch allgemeiner Teil der Beschreibung. Bei Verunreinigung der Abgase durch bspw. Quecksilber kann Aktivkohle, bei Schwefel auch Kalk zum Einsatz kommen.

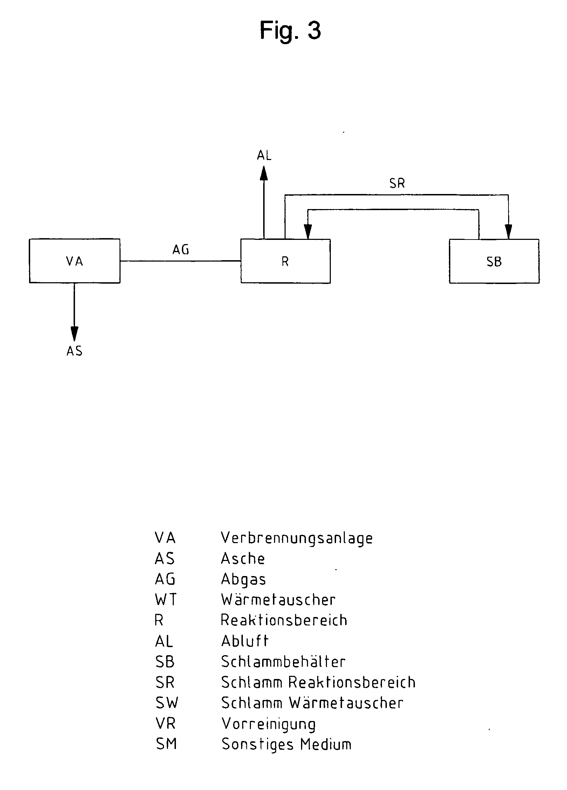

Fig.3 zeigt eine Ausführung ohne den Einsatz eines Wärmetauschers (WT). Die Abgase gelangen direkt in den Reaktionsbereich. Diese Variante kommt beispielsweise zum Einsatz bei

Abgasen (AG) aus kalter Trocknung, welche eine Temperatur von ca. 25-70°C aufweisen.

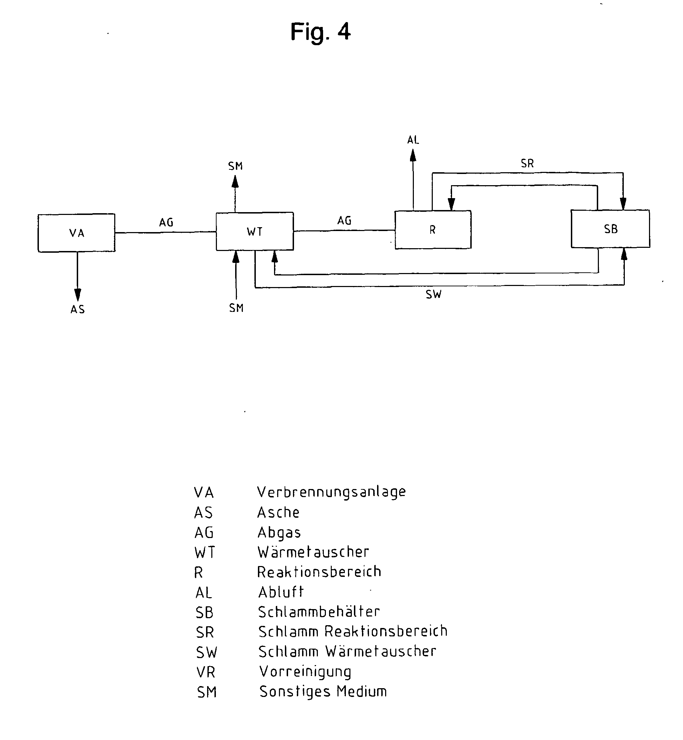

Fig.4 zeigt eine Variante, welche zum Kühlen der heißen Abgase (AG) nicht nur Schlamm aus dem Schlammbereich (SB) an den Wärmetauscher (WT) leitet, sondern zusätzlich auch noch ein sonstiges Medium (SM) zur Unterstützung an den Wärmetauscher (WT) führt. Vor dem vollständigen Abkühlen wird die Wärme abgezogen und extern genutzt. Hier kann bspw.

Eine Wasser/Wasser - Kühlung, Thermoöl oder auch ein Ventilator zum Einsatz kommen.

Die abgezogene Energie wird bspw. zur Stromproduktion genutzt.

Auch Fig. 5 zeigt den Einsatz des bereits in Fig.4 dargestellten sonstigen Mediums (SM). Jedoch wird in dieser Variante ausschließlich dieses externe Medium als Kühlunterstützung für den Wärmetauscher (WT) eingesetzt.

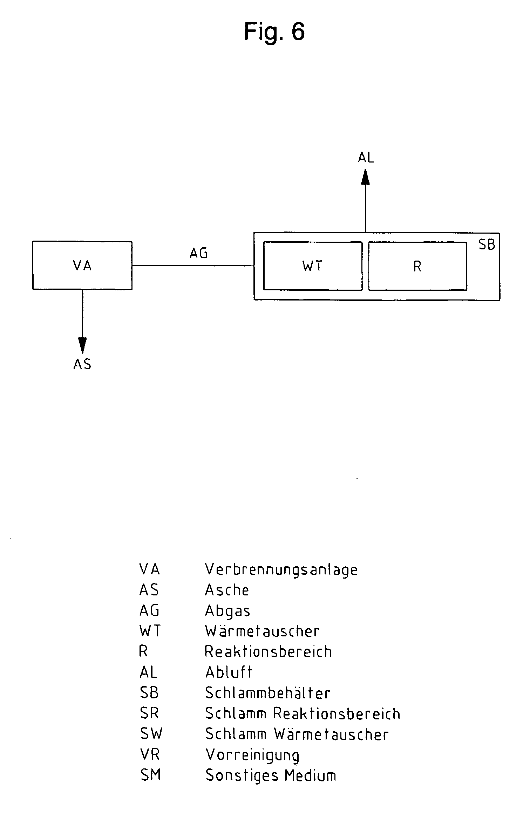

Eine wesentliche Variante ist in Fig.6 dargestellt. Diese zeigt die Anordnung des Reaktionsbereiches (R) und des Wärmetauschers (WT) gemeinsam im Schlammbereich (SB). Idealerweise befindet sich der Wärmetauscher (WT) somit im Belebungsbecken. Die Abgase (AG), gegebenenfalls zusammen mit Kondensat werden im Bodenbereich des Belebungsbeckens eingedüst. Beim Aufsteigen werden die Abgase durch die Bakterien umgesetzt und gereinigt.

Der Reaktionsbereich (R) befindet sich dabei im Bereich oberhalb der Eindüsung. Abluft (AL) verlässt in reinem Zustand das Belebungsbecken.

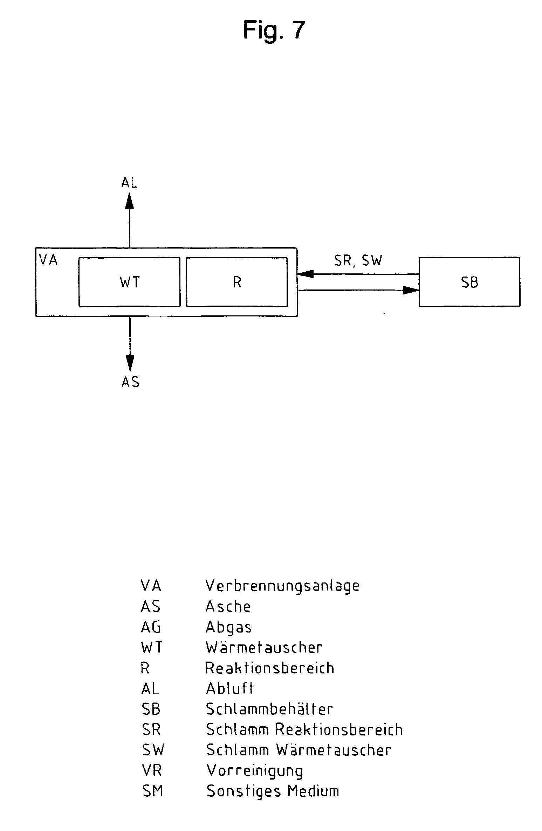

Fig. 7 zeigt eine modulartige Ausbildung der Vorrichtung zur Durchführung des Verfahrens.

Dabei sind sowohl die Verbrennungsanlage (VA) als auch der Wärmetauscher (WT) und der Reaktionsbereich (R) zu einer Einheit zusammengefasst. Diese Einheit kann auch mobil ausgebildet sein. Schlamm wird aus einem außerhalb dieser Einheit befindlichen Schlammbereich (SB) zu Reaktion in die Einheit geleitet und nach erfolgter Reaktion und Reinigung wieder aus der Einheit verbracht. Die gereinigte Ablauft wird aus der Einheit an die Umwelt abgegeben.

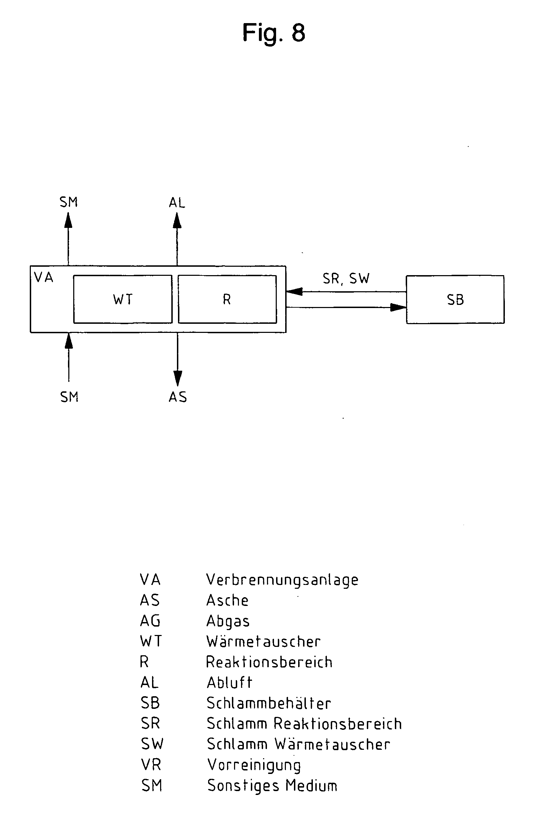

Fig. 8 zeigt eine Weiterbildung der in Fig. 7 dargestellten Einheit. Hier werden sonstige Medien zur Unterstützung des Wärmetauschers (WT) in die Einheit verbracht und Energie aus der Abkühlung exportiert.

## Patentansprüche

1. Verfahren zur Behandlung von mit Schadstoffen behafteten Abgasen aus der thermischen Verwertung, ausgewählt aus Pyrolyse, Thermolyse und Verbrennung von Reststoffen, das folgende Schritte umfasst:
(i) Einbringen der Abgase in einen Reaktionsbereich, der ein Reaktionsmedium, ausgewählt aus gegebenenfalls mit Gas durchsetztem Klärschlamm und Wasser-Schlamm-Gemischen, und Bakterien zur Umsetzung der Schadstoffe enthält, wobei dem Reaktionsmedium Wärme zugeführt wird,
(ii) bakterielle Umsetzung der Schadstoffe und Bindung des gegebenenfalls nach der bakteriellen Umsetzung verbleibenden Restschadstoffanteils im Reaktionsmedium,
(iii) Wiedereinbringung von bei der Schadstoffumsetzung freigesetzter Energie in den Verfahrenskreislauf durch Wärmeanstausch zwischen Reaktionsbereich und dem durch den Umsetzungsprozess enblehenden Schlamm,
(iv) Abführen der gereinigten Abgase.

2. Verfahren nach Anspruch 1, worin die Reststoffe biogene Reststoffe sind.

3. Verfahren nach Anspruch 1 oder 2, worin der Reaktionsbereich ein mit Klärschlamm gefülltes Belebungsbecken ist.

4. Verfahren nach Anspruch 1 oder 2, worin der Reaktionsbereich eine mit Klärschlamm gefüllte Kolonne ist.

5. Verfahren nach Anspruch 4, worin die Kolonne mit Klärschlamm aus einem Faulturm, Schlammbecken oder Belebungsbecken gespeist wird, und der Klärschlamm nach erfolgter Reaktion dorthin zurückgeführt wird.

6. Verfahren nach mindestens einem der vorhergehenden Ansprüche, worin das Abgas vor dem Einbringen in den Reaktionsbereich abgekühlt wird.

7. Verfahren nach Anspruch 6, worin das Abgas auf die Temperatur des Reaktionsbereiches abgekühlt wird.

8. Verfahren nach Anspruch 6 oder 7, worin das Abgas auf 8-14°C abgekühlt wird.

9. Verfahren nach mindestens einem der Ansprüche 6-8, worin die Abkühlung mittels eines Wärmetauschers erfolgt.

10. Verfahren nach Anspruch 9, worin dem Wärmetauscher als Kühlmittel das Reaktionsmedium und/oder ein externes Medium zugeführt werden.

11. Verfahren nach Anspruch 9 oder 10, worin dem Wärmetauscher bei der Abkühlung gegebenenfalls entstandenes Kondensat entzogen wird.

12. Verfahren nach mindestens einem der Ansprüche 9-11, worin die über den Wärmetauscher abgegebene Wärme und gegebenenfalls entstandenes Kondensat dem Reaktionsmedium und/oder einer externen Verwendung zugeführt wird.

13. Verfahren nach mindestens einem der Ansprüche 6-12, worin die Kühlung des Abgases in mehreren Schritten erfolgt.

14. Verfahren nach mindestens einem der Ansprüche 6-13, worin bei korrosivem Abgas die Abkühlung außerhalb des Reaktionsbereiches maximal bis zum Kondensationspunkt des korrosiven Anteils und die weitere Abkühlung im Reaktionsbereich erfolgt.

15. Verfahren nach mindestens einem der vorhergehenden Ansprüche, worin die Schadstoffe unter Nutzung von Restsauerstoff aus dem eingebrachten Abgas zu Schlamm umgesetzt werden.

16. Verfahren nach mindestens einem der vorhergehenden Ansprüche, worin nach der bakteriellen Umsetzung verbleibende Restschadstoffe, insbesondere Staubpartikel, an das Reaktionsmedium gebunden werden.

17. Verfahren nach mindestens einem der vorhergehenden Ansprüche, worin das Abgas vor dem Einbringen in den Reaktionsbereich vorgereinigt wird.

18. Verfahren nach Anspruch 17, worin die Vorreinigung mittels Sorption oder eines Schlamm/Organikfilters durchgeführt wird.

19. Verfahren nach mindestens einem der Ansprüche 1-18, **dadurch gekennzeichnet, dass** es in einer Vorrichtung durchgeführt wird, die einen ein Reaktionsmedium und Bakterien zur Umsetzung der Schadstoffe enthaltenden Reaktionsbereich (R), ein Schlammsammelbehältnis (SB) und einen Wärmetauscher (WT) umfasst.

20. Verfahren nach Anspruch 19, worin Reaktionsbereich (R) und Schlammsammelbehältnis (SB) durch ein Belebungsbecken oder eine Kolonne mit Schlammsammelbehältnis gebildet werden.

21. Verfahren nach Anspruch 20, die ein Belebungsbecken und einen darin bereitgestellten Wärmetauscher umfasst.

22. Verfahren nach mindestens einem der Ansprüche 19-21, worin der Wärmetauscher mäanderförmig ausgebildet ist und anschließend an den Wärmetauscher ein Eindüsungssystem zum Eindüsen des Abgases und gegebenenfalls bei der Abkühlung entstandenen Kondensats in den Klärschlamm bereitgestellt ist.

23. Verfahren nach mindestens einem der Ansprüche 19-22, das ferner eine thermische Verwertung von Reststoffen umfasst.

24. Verfahren nach Anspruch 23, worin die Anlage zur thermischen Verwertung von Reststoffen, der Reaktionsbereich und der Wärmetauscher zu einer baulichen Einheit zusammengefasst sind.

25. Verfahren nach Anspruch 24, worin die bauliche Einheit aus Modulen besteht.

26. Verfahren nach Anspruch 25, worin die aus Modulen aufgebaute bauliche Einheit transportabel ausgebildet ist.

## Claims

1. Process for treating waste gases contaminated with noxious substances from thermal utilisation, selected from pyrolysis, thermolysis and combustion of residual materials, which comprises the following steps:
(i) introduction of the waste gases into a reaction zone which contains a reaction medium, selected from sewage sludge optionally penetrated by gas and water-sludge mixtures, and bacteria for converting the noxious substances, wherein heat is supplied to the reaction medium,
(ii) bacterial conversion of the noxious substances and binding of the residual noxious substance portion potentially remaining after bacterial conversion in the reaction medium,
(iii) re-introduction of energy released during noxious substance conversion to the process circulation by heat exchange between reaction zone and the sludge being produced by the conversion process,
(iv) removal of the purified waste gases.

2. Process according to claim 1, wherein the residual materials are biogenic residual materials.

3. Process according to claim 1 or 2, wherein the reaction zone is an activated-sludge tank filled with sewage sludge.

4. Process according to claim 1 or 2, wherein the reaction zone is a column filled with sewage sludge.

5. Process according to claim 4, wherein the column is fed with sewage sludge from a sludge-digestion tower, sludge tank or activated-sludge tank, and the sewage sludge is returned there after the reaction has taken place.

6. Process according to at least one of the preceding claims, wherein the waste gas is cooled before introduction into the reaction zone.

7. Process according to claim 6, wherein the waste gas is cooled to the temperature of the reaction zone.

8. Process according to claim 6 or 7, wherein the waste gas is cooled to 8-14°C.

9. Process according to at least one of claims 6-8, wherein cooling is effected by means of a heat exchanger.

10. Process according to claim 9, wherein the reaction medium and/or an external medium are supplied to the heat exchanger as coolants.

11. Process according to claim 9 or 10, wherein condensate potentially being produced during cooling is withdrawn from the heat exchanger.

12. Process according to at least one of claims 9-11, wherein the heat released via the heat exchanger and condensate potentially being produced is supplied to the reaction medium and/or to an external use.

13. Process according to at least one of claims 6-12, wherein cooling of the waste gas is effected in several steps.

14. Process according to at least one of claims 6-13, wherein in the case of corrosive waste gas, cooling is effected outside of the reaction zone at the utmost to the condensation point of the corrosive portion and further cooling in the reaction zone.

15. Process according to at least one of the preceding claims, wherein the noxious substances are converted to form sludge with utilisation of residual oxygen from the waste gas introduced.

16. Process according to at least one of the preceding claims, wherein residual noxious substances remaining after bacterial conversion, in particular dust particles, are bound to the reaction medium.

17. Process according to at least one of the preceding claims, wherein the waste gas is pre-purified before introduction into the reaction zone.

18. Process according to claim 17, wherein the pre-purification is carried out by means of sorption or of a sludge/organic filter.

19. Process according to at least one of claims 1-18, **characterised in that** it is carried out in a device which comprises a reaction zone (R) containing a reaction medium and bacteria for converting the noxious substances, a sludge-collecting container (SB) and a heat exchanger (WT).

20. Process according to claim 19, wherein reaction zone (R) and sludge-collecting container (SB) are formed by an activated-sludge tank or a column with sludge-collecting container.

21. Process according to claim 20, which comprises an activated-sludge tank and a heat exchanger provided therein.

22. Process according to at least one of claims 19-21, wherein the heat exchanger is designed to be meander-like and following the heat exchanger, a spraying system is provided for spraying the waste gas and condensate potentially being produced during cooling into the sewage sludge.

23. Process according to at least one of claims 19-22, which further comprises thermal utilisation of residual materials.

24. Process according to claim 23, wherein the plant for thermal utilisation of residual materials, the reaction zone and the heat exchanger are combined to form a structural unit.

25. Process according to claim 24, wherein the structural unit consists of modules.

26. Process according to claim 25, wherein the structural unit assembled from modules is designed to be transportable.

## Revendications

1. Procédé pour le traitement de gaz d'échappement chargés de polluants, issus de la valorisation thermique, sélectionné parmi la pyrolyse, la thermolyse et la combustion de déchets comprenant les étapes suivantes :
(i) introduction des gaz d'échappement dans une zone de réaction contenant un fluide réactionnel, sélectionné parmi une boue de curage, le cas échéant traversée par du gaz, et des mélanges eau-boue, et des bactéries, pour la conversion des polluants, de la chaleur étant amenée au fluide réactionnel,
(ii) conversion bactérienne des polluants et liaison de la proportion résiduelle en polluants, subsistant le cas échéant après la conversion bactérienne, dans le fluide réactionnel,
(iii) réintroduction d'énergie, dégagée lors de la conversion des polluants, dans le circuit du procédé, par échange de chaleur entre la zone de réaction et la boue constituée par le processus de conversion,
(iv) évacuation des gaz d'échappement épurés.

2. Procédé selon la revendication 1, dans lequel les déchets sont des déchets biogènes.

3. Procédé selon la revendication 1 ou 2, dans lequel la zone de réaction est un bassin d'activation rempli de boue de curage.

4. Procédé selon la revendication 1 ou 2, dans lequel la zone de réaction est une colonne remplie de boue de curage.

5. Procédé selon la revendication 4, dans lequel la colonne est alimentée en boue de curage à partir d'une tour de digestion, d'un bassin à boue, ou d'un bassin d'activation, et la boue de curage y est recyclée, une fois la réaction effectuée.

6. Procédé selon au moins l'une des revendications précédentes, dans lequel les gaz d'échappement sont refroidis avant introduction dans la zone de réaction.

7. Procédé selon la revendication 6, dans lequel les gaz d'échappement sont refroidis à la température de la zone de réaction.

8. Procédé selon la revendication 6 ou 7, dans lequel les gaz d'échappement sont refroidis à une température de 8 à 14°C.

9. Procédé selon au moins l'une des revendications 6 à 8, dans lequel le refroidissement s'effectue à l'aide d'un échangeur de chaleur.

10. Procédé selon la revendication 9, dans lequel le fluide réactionnel et/ou un fluide externe est/sont amené(s), à titre de fluide de refroidissement, à l'échangeur de chaleur.

11. Procédé selon la revendication 9 ou 10, dans lequel du condensat, produit le cas échéant lors du refroidissement, est extrait de l'échangeur de chaleur.

12. Procédé selon au moins l'une des revendications 9 à 11, dans lequel la chaleur évacuée par l'échangeur de chaleur et, le cas échéant, le condensat produit, sont amenés au fluide réactionnel ou à une utilisation externe.

13. Procédé selon au moins l'une des revendications 6 à 12, dans lequel le refroidissement des gaz d'échappement s'effectue en plusieurs étapes.

14. Procédé selon au moins l'une des revendications 6 à 13, dans lequel, dans le cas de gaz d'échappement corrosifs, le refroidissement hors de la zone de réaction est effectué au maximum jusqu'au point de condensation de la fraction corrosive, et la suite du refroidissement est effectuée dans la zone de réaction.

15. Procédé selon au moins l'une des revendications précédentes, dans lequel les déchets sont convertis en boue en exploitant l'oxygène résiduel issu des gaz d'échappement introduits.

16. Procédé selon au moins l'une des revendications précédentes, dans lequel des polluants résiduels, en particulier des particules de poussière, subsistant après la conversion bactérienne, sont liés au fluide réactionnel.

17. Procédé selon au moins l'une des revendications précédentes, dans lequel les gaz d'échappement sont pré-épurés avant introduction dans la zone de réaction.

18. Procédé selon la revendication 17, dans lequel la pré-épuration est effectuée par sorption ou au moyen d'un filtre à boue/matières organiques.

19. Procédé selon au moins l'une des revendications 1 à 18, **caractérisé en ce qu'**il est mis en oeuvre dans un dispositif comprenant une zone de réaction (R) contenant un fluide réactionnel et des bactéries pour la conversion des polluants, un récipient collecteur des boues (SB) et un échangeur de chaleur (WT).

20. Procédé selon la revendication 19, dans lequel la zone de réaction (R) et le récipient collecteur des boues (SB) sont formés par un bassin d'activation ou une colonne avec récipient collecteur des boues.

21. Procédé selon la revendication 20, comprenant un bassin d'activation et un échangeur de chaleur y étant disposé.

22. Procédé selon au moins l'une des revendications 19 à 21, dans lequel l'échangeur de chaleur est réalisé en forme de méandre et un système d'insufflation, pour insuffler dans la boue de curage les gaz d'échappement et le condensat, produit le cas échéant lors du refroidissement, est disposé en raccordement à l'échangeur de chaleur.

23. Procédé selon au moins l'une des revendications 19 à 22, comprenant en outre une valorisation thermique des déchets.

24. Procédé selon la revendication 23, dans lequel l'installation servant à la valorisation thermique de déchets, la zone de réaction et l'échangeur de chaleur sont groupés en une unité de construction.

25. Procédé selon la revendication 24, dans lequel l'unité de construction est composée de modules.

26. Procédé selon la revendication 25, dans lequel l'unité de construction constituée à partir de modules est réalisée de manière à être transportable.
